(19) Europäisches Patentamt
European Patent Office
Office européen des brevets

(11) EP 3 483 953 A2

(12) **DEMANDE DE BREVET EUROPEEN**

(43) Date de publication:
**15.05.2019 Bulletin 2019/20**

(21) Numéro de dépôt: **18205937.8**

(22) Date de dépôt: **13.11.2018**

(51) Int Cl.:
***H01M 4/13*** *(2010.01)* ***H01M 4/139*** *(2010.01)*
***H01M 4/62*** *(2006.01)* ***H01M 10/0525*** *(2010.01)*
***H01M 10/0565*** *(2010.01)*

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **14.11.2017 FR 1760688**

(71) Demandeur: **Commissariat à l'énergie atomique et aux énergies alternatives**
**75015 Paris (FR)**

(72) Inventeurs:
- **SOLAN, Sébastien**
**38170 SEYSSINET-PARISET (FR)**
- **THOMAS, Yohann**
**38100 GRENOBLE (FR)**

(74) Mandataire: **Brevalex**
**95, rue d'Amsterdam**
**75378 Paris Cedex 8 (FR)**

(54) **COMPOSITION SPECIFIQUE POUR LA FABRICATION D'ELECTRODES DESTINEES A UNE BATTERIE AU LITHIUM**

(57) L'invention a trait à des compositions aqueuses pour la fabrication d'électrode pour batterie au lithium comprenant au moins un premier polymère de la famille des poly(acide acrylique), au moins un deuxième polymère de la famille des polyoxydes d'éthylène, au moins un matériau actif sous forme particulaire et au moins un matériau conducteur électronique sous forme particulaire.

EP 3 483 953 A2

## Description

### DOMAINE TECHNIQUE

La présente invention a trait à des compositions pour la fabrication d'électrodes destinées à être incorporées dans une batterie au lithium et, plus spécifiquement, une batterie du type lithium-ion, cette composition pouvant être utilisée *via* des procédés d'impression numérique haute résolution, tels que des procèdes à jet d'encre (dénommés par la terminologie anglaise *«inkjet»*) ou des procédés à jet d'aérosol (dénommés par la terminologie anglaise *«aerosol jetting»*). Les compositions de l'invention présentent également une stabilité de l'ordre de plusieurs mois et présentent des propriétés de post-gélification une fois mises en contact avec un électrolyte comprenant un solvant apte à gélifier au moins l'un des polymères entrant la constitution des compositions.

La présente invention a trait également à des électrodes à base de ces compositions et des batteries au lithium comprenant au moins l'une de ces électrodes et un électrolyte comprenant un solvant apte à gélifier au moins l'un des polymères entrant dans la constitution de ces compositions et de ces électrodes.

Le domaine général de l'invention peut être ainsi défini comme celui des batteries au lithium et, plus spécifiquement, des batteries du type lithium-ion.

Les batteries du type lithium-ion sont de plus en plus utilisées comme source d'énergie autonome, en particulier, dans les équipements électroniques portables (tels que les téléphones mobiles, les ordinateurs portables, l'outillage), où elles remplacent progressivement les accumulateurs nickel-cadmium (NiCd) et nickel-hydrure métallique (NiMH). Elles sont également très utilisées pour fournir l'alimentation en énergie nécessaire aux nouvelles microapplications, telles que les cartes à puce, les capteurs ou autres systèmes électromécaniques.

Les batteries du type lithium-ion fonctionnent sur le principe d'insertion-désinsertion (ou lithiation-délithiation) du lithium selon le principe suivant.

Lors de la décharge de la batterie, le lithium désinséré de l'électrode négative sous forme ionique $Li^+$ migre à travers l'électrolyte conducteur ionique et vient s'intercaler dans le réseau cristallin du matériau actif de l'électrode positive. Le passage de chaque ion $Li^+$ dans le circuit interne de la batterie est exactement compensé par le passage d'un électron dans le circuit externe, générant ainsi un courant électrique. La densité d'énergie massique libérée par ces réactions est à la fois proportionnelle à la différence de potentiel entre les deux électrodes et à la quantité de lithium qui se sera intercalée dans le matériau actif de l'électrode positive.

Lors de la charge de la batterie, les réactions se produisant au sein de la batterie sont les réactions inverses de la décharge, à savoir que :

- l'électrode négative va insérer du lithium dans le réseau du matériau la constituant; et
- l'électrode positive va libérer du lithium.

De par ce principe de fonctionnement, les batteries du type lithium-ion nécessitent donc la présence au niveau des électrodes d'un matériau apte à insérer ou désinsérer du lithium (dit également matériau actif).

Plus spécifiquement, les électrodes de batteries du type lithium-ion se présentent généralement sous forme d'un matériau composite comprenant une matrice polymérique (dit également liant polymérique), dans laquelle sont dispersés un matériau actif et un matériau conducteur électronique. Le liant polymérique, tel que du polyfluorure de vinylidène, a pour fonction, outre le fait de constituer une matrice, d'assurer la tenue mécanique des électrodes tout en assurant un bon contact entre l'électrolyte et les grains du matériau actif. Le matériau conducteur électronique, généralement du noir de carbone, améliore la conductivité électronique des électrodes.

Ces électrodes sont fabriquées, de manière classique, par un procédé comprenant les trois étapes suivantes :

- une étape de préparation d'une composition (également dénommée encre ou formulation) comprenant les ingrédients constitutifs des électrodes, à savoir, le liant polymérique, le matériau actif et le matériau conducteur électronique et comprenant un solvant de dispersion, par exemple, un solvant organique;
- une étape de dépôt de la composition obtenue sur un substrat collecteur de courant d'épaisseur allant de 20 à 40 $\mu$m, le substrat contribuant également à augmenter la conductivité électronique des électrodes et la nature de celui-ci pouvant varier en fonction de la nature du matériau actif (par exemple, un substrat collecteur de courant en cuivre, lorsque le matériau actif est du graphite ou un substrat collecteur de courant en aluminium, lorsque le matériau actif est du $Li_4Ti_5O_{12}$ ou du $LiFePO_4$) ;
- une étape d'élimination du solvant par mise à l'étuve (par exemple, une étuve de circulation d'air) du substrat collecteur de courant ainsi revêtu.

Plus précisément, lorsque le matériau conducteur électronique est du noir de carbone et le liant est du polyfluorure de vinylidène, l'étape de préparation de la composition peut consister, dans un premier temps, à mélanger,

dans de l'hexane, le matériau actif et le noir de carbone puis, dans un deuxième temps, à ajouter au mélange résultant le polyfluorure de vinylidène préalablement mis en solution dans du N-méthylpyrrolidone (NMP) (par exemple, à 12 % en masse). Avant d'être enduite sur un substrat, la composition peut voir sa viscosité ajustée par ajout d'une quantité supplémentaire de NMP.

Une fois l'étape d'élimination du solvant effectuée, les électrodes déposées sur le substrat collecteur de courant peuvent être soumises à une étape de compression, par exemple, par calandrage, afin d'avoir notamment une bonne cohésion entre les grains de matériau actif et de matériau conducteur électronique, de sorte à assurer une bonne conductivité électronique, le taux de compression appliqué devant, bien entendu, être choisi pour garantir une porosité suffisante nécessaire à la mouillabilité de l'électrode par l'électrolyte.

Enfin, après l'éventuelle étape de compression, les électrodes peuvent être soumises à une étape de découpe, par exemple, sous forme de pastilles, à l'aide d'emporte-pièces pour les adapter au format de la batterie, pour laquelle elles sont destinées. Les pastilles ainsi obtenues sont ensuite caractérisées, notamment, pour déterminer la masse de matériau actif contenu en elles selon la relation suivante :

$$m_{MA}=(m_{tot}-m_{collecteur})*\%MA$$

dans laquelle mMA, $m_{tot}$ et $m_{collecteur}$ représentent, respectivement, la masse de matériau actif, la masse totale de la pastille et la masse du collecteur de courant (toutes exprimées en mg) et %MA représente le pourcentage massique de matériau actif présent dans la composition.

A partir de la masse de matériau actif, il est possible d'accéder simplement à la valeur de capacité de la pastille par la relation suivante :

$$C_{pastille}=m_{MA}*C_{MA}*1000$$

avec $C_{pastille}$ et $C_{MA}$ désignant respectivement la capacité de la pastille (exprimée en mAh) et la capacité spécifique du matériau actif (exprimée en $mAh.g^{-1}$), les capacités spécifiques des matériaux actifs usuels étant connues.

Comme mentionné ci-dessus, les électrodes actuellement usitées sont préparées par des procédés impliquant l'utilisation de solvant organique, tel que l'hexane, le NMP, pour assurer la solubilisation des liants organiques. Toutefois, ces solvants ne sont pas des solvants verts, ce qui est défavorable du point de vue sanitaire.

Pour contourner l'utilisation de tels solvants, les recherches se sont orientées vers la mise au point de compositions pour la fabrication d'électrodes à base de liant(s) polymérique(s) qui sont aptes à se solubiliser dans un solvant non toxique, tel que l'eau, les liants polymériques solubles dans un solvant aqueux les plus couramment utilisés étant les polymères de la famille des carboxyméthylcelluloses, des polymères de la famille des polyacides acryliques (tels que décrit dans Journal of Power Sources, 189, 2009, 547-551 ou encore dans WO 2012/013872), les compositions ainsi obtenues étant ensuite déposées par des procédés d'enduction classique sur un substrat collecteur de courant puis séchées pour constituer des électrodes.

Au vu de ce qui existe, les auteurs de la présente invention se sont fixé pour objectif de proposer des compositions pour la fabrication d'électrode de batterie au lithium qui permettent l'utilisation de l'eau comme solvant, qui soient compatibles avec des procédés d'impression numérique, qui permettent une bonne dispersion des particules de matériaux actifs et de matériaux conducteurs électroniques et qui puissent se gélifier au contact d'un solvant spécifique de l'électrolyte, une fois intégrées sous forme d'électrodes dans une batterie au lithium. Par ailleurs, les compositions devront permettre d'accéder à de bonnes propriétés électrochimiques, notamment en termes de restitution de capacités, une fois mises en oeuvre sous forme d'électrodes dans une batterie au lithium.

## EXPOSÉ DE L'INVENTION

Ainsi, l'invention a trait à une composition aqueuse pour la fabrication d'électrode pour batterie au lithium comprenant au moins un premier polymère de la famille des poly(acide acrylique), au moins un deuxième polymère de la famille des polyoxydes d'éthylène, au moins un matériau actif sous forme particulaire et au moins un matériau conducteur électronique sous forme particulaire.

Grâce à l'utilisation de ces types de polymères hydrosolubles, les compositions résultantes permettent à la fois l'obtention d'une dispersion stable du ou des matériaux actifs et du ou des matériaux conducteurs électroniques, sont aptes à se gélifier au contact de solvants d'électrolytes, tels que les solvants dinitriles, et sont compatibles avec des techniques d'impression numérique, telles que des techniques d'impression haute résolution comme la technique par jet d'encre ou par jet d'aérosol.

Les compositions de l'invention sont des compositions aqueuses, ce qui signifie qu'elles comprennent, comme

solvant, de l'eau. Ceci n'exclut pas le fait que ces compositions peuvent comprendre également un solvant organique, de préférence, miscible avec l'eau.

Ces compositions comprennent au moins un premier polymère qui appartient à la famille des poly(acide acrylique), soit, en d'autres termes un polymère constitué par un enchaînement du motif répétitif de formule (I) suivante :

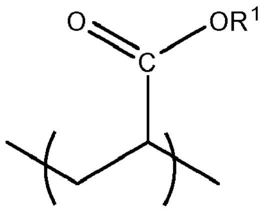

(I)

dans laquelle $R^1$ représente un atome d'hydrogène ou un cation monovalent, tel qu'un cation alcalin (par exemple, du sodium).

Lorsque $R^1$ représente un cation monovalent, le premier polymère est ainsi un polymère de famille des poly(acide acryliques) sous forme de sel, un exemple avantageux de cette famille étant les poly(acide acryliques) sodés, c'est-à-dire pour laquelle $R^1$ est Na.

Avantageusement, ce premier polymère présente une masse moléculaire moyenne allant de 100 000 à 500 000 g/mol, par exemple, 250 000 g/mol.

En outre, ce premier polymère est présent, avantageusement, dans la composition à hauteur de 5 à 10 % en masse par rapport à la masse totale de la composition.

Ce premier polymère est destiné à assurer le rôle de liant d'électrode et permet également de recouvrer la capacité spécifique théorique du matériau actif d'électrode. En outre, ce polymère acide est très adhésif et il est ainsi possible de l'enduire et de l'imprimer tout en atteignant des grammages élevés. Par ailleurs, ce polymère est stable à hautes températures (au moins jusqu'à 150°C), rendant possible son utilisation dans une large gamme de températures et bien plus large que celle communément recommandé par les constructeurs actuels de batteries lithium-ion fixant, pour gamme de températures utilisable, une gamme allant de -10°C à 60°C.

A titre d'exemple, ce premier polymère peut être un poly(acide acrylique) sodé comprenant un enchaînement du motif répétitif de formule (II) suivante :

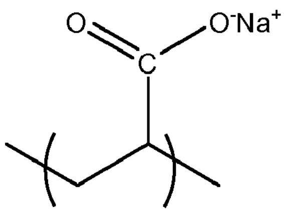

(II)

ce polymère présentant, par exemple, une masse moléculaire moyenne de 250 000 g/mol.

Les compositions de l'invention comprennent également au moins un deuxième polymère de la famille des polyoxydes d'éthylène, c'est-à-dire un polymère constitué par l'enchaînement du motif répétitif de formule (III) suivante :

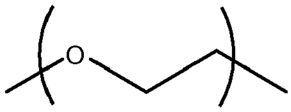

(III)

Avantageusement, ce deuxième polymère présente une masse moléculaire moyenne allant de 100 000 à 1 000 000 g/mol, par exemple, 400 000 g/mol.

En outre, ce deuxième polymère est présent, avantageusement, dans la composition à hauteur de 5 à 10 % en masse par rapport à la masse totale de la composition.

Ce deuxième polymère est apte à gonfler et se gélifier spontanément et former une matrice de gélification au contact d'un solvant d'électrolyte spécifique, tel qu'un solvant dinitrile.

Les compositions comprennent également au moins un matériau actif d'électrode sous forme particulaire.

Lorsque la composition est destinée à la fabrication d'une électrode positive, le matériau actif est un matériau actif d'électrode positive, par exemple, un matériau d'insertion du lithium, tel qu'un matériau dont la tension de décharge est supérieure à 4,5 V exprimée par rapport au couple $Li^+/Li$. Un matériau répondant à cette spécificité peut être un matériau du type matériau lithié à structure spinelle, ce matériau étant connu sous l'appellation de « spinelle 5V ». Ainsi, le matériau actif d'électrode positive peut être un oxyde lithié comprenant du manganèse de structure spinelle de formule (IV) suivante :

$$LiNi_{1-X}Mn_{1+x}O_4 \qquad (IV)$$

dans laquelle 0<x<1.

En particulier, un oxyde lithié conforme à cette définition et particulièrement avantageux est l'oxyde de formule $LiNi_{0,5}M_{n1,5}O_4$, qui présente la particularité de présenter un potentiel d'insertion/désinsertion du lithium de l'ordre de 4,7V (ce potentiel étant exprimé par rapport au couple de référence Li+/Li).

En variante des oxydes lithiés susmentionnés de formule (IV) susmentionnée, l'électrode positive peut comprendre, comme matériau actif, un oxyde lithié de l'une des formules (V) ou (VI) suivantes :

$$LiNi_xMn_yCo_zO_2 \qquad (V)$$

$$Li_{1+x}(Ni_{1/3}Mn_{1/3}Co_{1/3})_{1-x}O_2 \qquad (VI)$$

dans lesquelles 0<x,y,z<1 et x+y+z=1, tel que $LiNi_{1/3}Mn_{1/3}Co_{1/3}O_2$ (connu également sous l'abréviation NMC) ;

Comme autres matériaux actifs susceptibles d'entrer dans la constitution de l'électrode positive, il peut s'agir :

- d'un matériau de formule $LiM^1PO_4$, dans laquelle $M^1$ est un élément de transition, des matériaux de ce type pouvant être $LiFePO_4$, $LiCoPO_4$ ou $LiNiPO_4$ ;
- d'un matériau de formule $LiMeO_2$ avec Me étant un élément choisi parmi Ni, Co, Mn, Al et les combinaisons de ceux-ci, tel que $Li(Ni,Co,Al)O_2$ et plus spécifiquement $Li(Ni_{0,8}Co_{0,15}Al_{0,05})O_2$ (connu également sous l'abréviation NCA) ;
- d'un matériau de formule $LiM'_2O_4$ avec M' étant un élément choisi parmi Mn, Co et Ni ;
- d'un matériau de formule $LiNi_{1-x}Co_xO_2$ avec 0<x<1 ;
- du dioxyde de manganèse $MnO_2$.

Le matériau actif d'électrode positive peut être également un composé actif organique, tel qu'un composé anthraquinone ou un polymère poly(2,2,6,6-tétraméthylpipéridinyloxyméthacrylate) (dénommé aussi par l'abréviation PTMA).

Lorsque la composition est destinée à la fabrication d'une électrode négative, le matériau actif est un matériau actif d'électrode négative.

Le matériau actif d'électrode négative peut être du carbone, par exemple, sous l'une de ses formes allotropiques, telles que le graphite; un oxyde mixte de lithium, tel que $Li_4Ti_5O_{12}$ ou $LiTiO_2$; un matériau actif organique, tel que du pérylène-3,4,9,10-tétracarboxylate de tétralithium (dénommé aussi par l'abréviation $PTCLi_4$)

Le matériau actif, qu'il soit destiné à une électrode positive ou une électrode négative, se présente sous forme particulaire et, avantageusement sous forme de nanoparticules.

En outre, le matériau actif est présent, avantageusement, dans la composition à hauteur de 50 à 80 % en masse par rapport à la masse totale de la composition.

Le matériau conducteur électronique est, de préférence, un matériau carboné, à savoir un matériau comprenant du carbone à l'état élémentaire. En particulier, il peut s'agir de noir de carbone, de nanotubes de carbone, de fibres de carbone et des mélanges de ceux-ci. Plus spécifiquement, le matériau conducteur électronique peut consister en un mélange de noir de carbone, par exemple, sous forme de nanoparticules, et de nanotubes de carbone.

Le matériau conducteur électronique est, de préférence, présent dans la composition à hauteur de 1 à 20 % en masse par rapport à la masse totale de la composition.

Enfin, les compositions de l'invention comprennent de l'eau, qui peut, en particulier, émaner initialement du mélange de polymères utilisé et résulter également d'un ajout. Les compositions peuvent comprendre en outre, un solvant organique, de préférence, miscible avec l'eau. Des solvants organiques appropriés peuvent être des solvants organiques de la famille des glycols, tels que l'éthylène glycol. Le ou les solvants organiques peuvent notamment avoir pour fonction d'ajuster l'extrait sec des compositions de l'invention. A ce sujet, l'extrait sec des compositions de l'invention

peut aller de 0,5 à 40 %, par exemple, peut être égal à 10 %, lorsque la composition est destinée à être déposée par un procédé d'impression du type à jet d'aérosol. Lorsque qu'elle est envisagée pour un procédé d'impression du type à jet d'encre, l'extrait sec peut être diminué par ajout d'un solvant, de sorte à diminuer la viscosité.

L'extrait sec correspond spécifiquement au pourcentage de matière solide par rapport à l'ensemble des ingrédients de la composition. Il est déterminé par le biais des deux équations suivantes :

- une première équation visant à déterminer la masse des ingrédients solides utilisés, dite $m_{tot}$ exprimée en mg, cette équation étant la suivante :

$$m_{tot} = m_{MA} + m_{MC} + m_{polymères}$$

  avec $m_{MA}$ corespondant à la masse de matériau actif, $m_{MC}$ correspondant à la masse de matériau conducteur électronique (par exemple, la masse de noir de carbone + la masse de nanotubes de carbone) et $m_{polymères}$ correspondant à la masse du premier polymère et du deuxième polymère ;
- une deuxième équation visant à accéder à l'extrait sec de la composition, dit ES :

$$ES= (m_{tot}/m_{tot+}m_{eau}+m_{solvant\ organique})$$

  avec $m_{eau}$ correspondant à la masse d'eau contenue dans la composition (qu'il s'agisse d'eau contenu initialement dans le premier et/ou le deuxième polymère et éventuellement de l'eau ajoutée) et $m_{solvant}$ organique correspondant à la masse de solvant organique contenue éventuellement dans la composition, étant entendu que cette masse sera nulle si la composition ne comprend pas de solvant organique.

Les compositions de l'invention peuvent présenter, avantageusement, une viscosité dynamique faible, plus spécifiquement, une viscosité dynamique inférieure à 1 Pa.s pour un taux de cisaillement de 10 $s^{-1}$ et/ou une dispersion granulométrique telle que $d_{90}$ soit inférieure à 5 $\mu$m, ce qui signifie, en d'autres termes, que 90 % des particules constitutives de la solution présentent un diamètre moyen de particules inférieur à 5 $\mu$m.

Les compositions de l'invention peuvent être constituées exclusivement d'eau, éventuellement d'au moins solvant organique, tel qu'un solvant organique de la famille des solvants des glycols (par exemple, l'éthylène glycol), d'au moins un premier polymère de la famille des poly(acide acrylique), d'au moins un deuxième polymère de la famille des polyoxydes d'éthylène, d'au moins un matériau actif sous forme particulaire et d'au moins un matériau conducteur électronique sous forme particulaire.

A titre d'exemples, des compositions spécifiques conformes à l'invention sont des compositions aqueuses comprenant :

- comme premier polymère, un poly(acide acrylique) sodé, par exemple, de masse moléculaire moyenne de 250 000 $g.mol^{-1}$;
- comme deuxième polymère, un polyoxyde d'éthylène, par exemple, de masse moléculaire moyenne de 400 000 $g.mol^{-1}$;
- comme matériau actif, du $LiFePO_4$ ou du $Li_4Ti_5O_{12}$;
- comme matériau conducteur électronique, du noir de carbone et des nanotubes de carbone, par exemple, multiparois ;
- un solvant organique qui est de l'éthylène glycol,

l'extrait sec de cette composition pouvant être de 10 % et cette composition pouvant présenter une viscosité dynamique inférieure à 1 Pa.s pour un taux de cisaillement de 10 $s^{-1}$ et une dispersion granulométrique telle que $d_{90}$ soit inférieure à 5 $\mu$m.

Comme déjà précisé ci-dessus, les compositions de l'invention sont destinées à la fabrication d'électrodes pour batterie au lithium.

Aussi, l'invention a trait également à un procédé de préparation d'une électrode pour batterie au lithium comprenant les étapes suivantes :

- une étape de dépôt de la composition définie ci-dessus sous forme d'au moins une couche sur un substrat ;
- une étape d'élimination de l'eau et, le cas échéant, du ou des solvants organiques contenus dans la composition.

Compte tenu des propriétés des compositions de l'invention, le dépôt peut être réalisé par une technique

numérique d'impression telle que la technique à jet d'encre ou la technique à jet d'aérosol.

Quant à l'étape d'élimination, elle peut être réalisée par chauffage à une température permettant l'élimination de l'eau et du ou des solvants organiques, le cas échéant.

La ou les couches déposées peuvent se présenter sous différentes formes et notamment sous la forme d'un motif interdigité, c'est-à-dire un motif présentant une pluralité de bandes parallèles entre elles et reliées par une bande principale pouvant être perpendiculaire à l'ensemble des bandes parallèles susmentionnées.

Le substrat de dépôt est, avantageusement, un substrat collecteur de courant, par exemple, un substrat collecteur de courant en cuivre, lorsque le matériau actif est du graphite ou un substrat collecteur de courant en aluminium, lorsque le matériau actif est du $Li_4Ti_5O_{12}$ ou du $LiFePO_4$.

Les électrodes obtenues à partir des compositions de l'invention se composent ainsi d'un matériau composite comprenant une matrice polymérique comprenant au moins un premier polymère de la famille des poly(acide acrylique), au moins un deuxième polymère de la famille des polyoxydes d'éthylène, dans laquelle sont dispersés au moins un matériau actif sous forme particulaire et au moins un matériau conducteur électronique sous forme particulaire.

Les caractéristiques du premier polymère, du deuxième polymère, du matériau actif et du matériau conducteur électronique décrites au sujet des compositions peuvent être reprises pour le compte des électrodes obtenues à partir de ces compositions.

Les électrodes de l'invention peuvent être des électrodes souples ou flexibles, dès lors qu'elles sont déposées sur un substrat collecteur de courant présentant ces propriétés.

L'invention a trait également à une cellule de batterie au lithium comprenant une électrode positive et une électrode négative disposées de part et d'autre d'un électrolyte, caractérisée en ce que l'une au moins desdites électrodes est une électrode conforme à l'invention et en ce que l'électrolyte comprend au moins un solvant d'électrolyte apte à gélifier l'un au moins des polymères constitutifs de la ou les électrodes conformes à l'invention.

Ainsi, au contact dudit solvant d'électrolyte, la ou les électrodes conformes à l'invention vont se trouver dans un état au moins partiellement gélifié, ce qui permet d'éviter les problèmes de fuite d'électrolyte liquide.

Par électrode positive, on entend, classiquement, dans ce qui précède et ce qui suit, l'électrode qui fait office de cathode, quand l'accumulateur débite du courant (c'est-à-dire lorsqu'il est en processus de décharge) et qui fait office d'anode lorsque l'accumulateur est en processus de charge.

Par électrode négative, on entend, classiquement, dans ce qui précède et ce qui suit, l'électrode qui fait office d'anode, quand l'accumulateur débite du courant (c'est-à-dire lorsqu'il est en processus de décharge) et qui fait office de cathode, lorsque l'accumulateur est en processus de charge.

L'électrode positive et l'électrode négative peuvent être supportées par un substrat collecteur de courant, lequel sera avantageusement compatible avec un matériau compatible avec le matériau actif de l'électrode.

Selon l'invention, l'électrode positive peut être une électrode positive conforme à l'invention, par exemple, une électrode positive constituée d'un matériau composite comprenant une matrice polymérique comprenant au moins un premier polymère, qui est un poly(acide acrylique) sodé, par exemple, de masse moléculaire moyenne de 250 000 g/mol, au moins un deuxième polymère de la famille des polyoxydes d'éthylène, par exemple de masse moléculaire moyenne 400 000 g/mol, dans laquelle sont dispersés au moins un matériau actif sous forme particulaire, par exemple, du $LiFePO_4$ ou du $Li_4Ti_5O_{12}$ et au moins un matériau conducteur électronique sous forme particulaire, par exemple, un mélange de noir de carbone et de nanotubes de carbone, par exemple, multiparois et l'électrode négative peut être une électrode en lithium métallique.

L'électrolyte comprend au moins un solvant d'électrolyte apte à gélifier l'un au moins des polymères constitutifs de la ou les électrodes conformes à l'invention.

Le solvant d'électrolyte apte à gélifier peut être un solvant nitrile, et plus spécifiquement, un solvant dinitrile répondant à la formule (VII) suivante :

$$N{\equiv}C\text{-}R^2\text{-}C{\equiv}N \qquad \text{(VII)}$$

dans laquelle $R^2$ est un groupe alkylène et, plus spécifiquement, un groupe alkylène comprenant 1 ou 2 atomes de carbone, soit un groupe méthylène $-CH_2-$ ou un groupe éthylène $-CH_2-CH_2-$.

A titre d'exemple, un solvant dinitrile particulièrement avantageux est le succinodinitrile de formule (VIII) suivante :

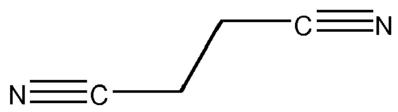

(VIII)

Ce solvant a pour particularité d'être un composé organique cristallin hyperplastique ininflammable, non toxique et non volatile aux températures d'utilisation de la cellule, sachant que son point d'ébullition est de l'ordre de 266°C et son point de fusion est de l'ordre de 57°C, ce qui permet d'améliorer la sécurité de la cellule. Du fait de sa forte polarité, il permet également de solubiliser des sels de lithium et d'obtenir un gel, dès lors qu'il est mis en contact avec un polymère gélifiable. Qui plus est, il présente une stabilité électrochimique sur une large fenêtre de potentiels. Il est ainsi possible de travailler en cohabitation avec des électrodes comprenant des matériaux actifs d'électrodes aptes à délivrer une tension nominale élevée, telle qu'une tension de l'ordre de 5 V. Qui plus est, il permet l'obtention d'électrolyte gélifié, qui présente une sensibilité à l'humidité moindre par rapport à des électrolytes liquides conventionnels.

Le solvant d'électrolyte peut être également un solvant carbonate, un solvant nitrile ou un solvant éther, sous réserve qu'il soit apte à gélifier au moins des polymères entrant dans la constitution de la ou les électrodes conformes à l'invention.

L'électrolyte comprend également classiquement au moins un sel de lithium, lequel peut être choisi parmi le *bis*-trifluorométhanesulfonylimidure de lithium (dénommé également LiTFSI), le *bis*(oxalato)borate de lithium (dénommé également LiBOB), $LiPF_e$, $LiClO_4$, $LiBF_4$, $LiAsF_6$, $LiCF_3SO_3$, $LiN(CF_3SO_2)_3$, $LiN(C_2F_5SO_2)$ et les mélanges de ceux-ci.

L'électrolyte peut être également un électrolyte gélifié auquel cas l'électrolyte comprend, avantageusement, un ou plusieurs polymères gélifiants au contact du solvant d'électrolyte.

Ce ou ces polymères gélifiants, lorsque le solvant d'électrolyte est un solvant dinitrile, peuvent être notamment choisis parmi :

- les (co)polymères poly(méth)acrylates, tels que les polyméthacrylates de méthyle (également dénommés PMMA), les polyméthacrylates de n-butyle (également dénommés PBMA), les polyméthacrylates d'isobutyle, les poly(méthacrylate de *n*-butyle-*co*-méthacrylate d'isobutyle) (également dénommés P(BMA-co-isoBMA)), les poly(méthacrylate de *n*-butyle-*co*-méthacrylate de méthyle) (également dénommés P(BMA-co-MMA)) ;
- les (co)polymères perfluorés, tels que les polyfluorures de vinylidène (également dénommés PVDF) et les poly(fluorure de vinylidène-*co*-hexafluoropropylène) (également dénommés PVDF-HFP) ;
- les polyacrylonitriles (également dénommés PAN) et des copolymères à base d'acrylonitrile, tels que les poly(styrène-*co*-acrylonitrile) (également dénommés $PS_A$) ;
- les polyoxydes d'éthylène (également dénommés POE) ;
- les polyvinylpyrrolidones (également dénommés PVP) ;
- les polymères acryliques, tels que les poly(acide acrylique) (également dénommés PAAc) et, plus spécifiquement, les poly(acide acrylique) sodés (également dénommés $PAA_{Na}$); et
- les mélanges de ceux-ci.

A titre d'exemple, l'électrolyte gélifié peut être un électrolyte comprenant un mélange d'un polyoxyde d'éthylène et d'un poly(acide acrylique) sodé (par exemple, un mélange 50 :50) et comprenant du succinodinitrile et un sel de lithium, tel que LiTFSI (par exemple, 1M).

En outre, le rapport massique (solvant dinitrile + sel de lithium)/(polymère) peut être compris entre 60/40 et 90/10, ce rapport permettant de maintenir un équilibre entre la conductivité ionique apportée par le mélange (solvant dinitrile+sel de lithium) et la tenue mécanique apportée par le polymère.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

## BRÈVE DESCRIPTION DES DESSINS

La figure 1 est une courbe d'écoulement illustrant l'évolution de la viscosité dynamique $\mu$ (en Pa.s) en fonction du taux de cisaillement D (en $s^{-1}$) pour la composition définie à l'exemple 1 ci-dessous.

La figure 2 est un graphique illustrant la distribution granulométrique de la composition définie à l'exemple 1 ci-dessous avec en abscisse le diamètre moyen de particules d (en $\mu$m) et en ordonnée la fréquence F (en %), la courbe a) étant relative à la courbe de fréquence séparée et la courbe b) étant relative à la courbe de fréquence cumulée.

La figure 3 est un graphique illustrant l'évolution de la tension U (en V) en fonction de la capacité C (en mAh/g) pour la batterie définie à l'exemple 1 avec les courbes a) et b) relatives aux cycles 2 et 10 pour le régime C/20-D/20, la courbe c) relative au cycle 40 pour le régime C/10-D/10, la courbe d) relative au cycle 60 pour le régime C/5-D/5 et la courbe e) relative au cycle 70 pour le régime C/2-D/2.

La figure 4 est une courbe d'écoulement illustrant l'évolution de la viscosité dynamique $\mu$ (en Pa.s) en fonction du taux de cisaillement D (en $s^{-1}$) pour la composition définie à l'exemple 2 ci-dessous.

La figure 5 est un graphique illustrant la distribution granulométrique de la composition définie à l'exemple 2 ci-dessous avec en abscisse le diamètre moyen de particules d (en $\mu$m) et en ordonnée la fréquence F (en %), la courbe a) étant relative à la courbe de fréquence séparée et la courbe b) étant relative à la courbe de fréquence cumulée.

La figure 6 est un graphique illustrant l'évolution de la tension U (en V) en fonction de la capacité C (en mAh/g) pour la batterie définie à l'exemple 2 avec la courbe a) relative au cycle 15 pour le régime C/20-D/20, la courbe b) relative au cycle 23 pour le régime C/10-D/10, la courbe c) relative au cycle 35 pour le régime C/5-D/5 et la courbe d) relative au cycle 74 pour le régime C/2-D/2.

La figure 7 illustre deux photographies du motif obtenu par dépôt par jet d'aérosol avec la composition de l'exemple 1.

## EXPOSÉ DÉTAILLÉ DE MODES DE RÉALISATION PARTICULIERS

EXEMPLE 1

Le présent exemple illustre la préparation d'une composition conforme à l'invention comprenant les ingrédients suivants : de l'acide polyacrylique sodé, du polyoxyde d'éthylène, du $LiFePO_4$, du noir de carbone Super P®, des nanotubes de carbone multiparois et de l'éthylène glycol, ce dernier étant utilisé pour ajuster l'extrait sec de la composition à une valeur choisie.

L'acide polyacrylique sodé répond à la formule suivante :

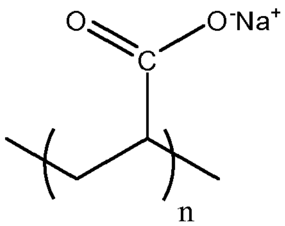

avec n correspondant au nombre de répétition du motif répétitif pris entre parenthèses.

Plus spécifiquement, l'acide polyacrylique sodé utilisé présente une masse moléculaire moyenne de 250 000 g/mol.

Le polyoxyde d'éthylène répond à la formule suivante :

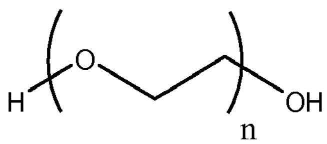

avec n correspondant au nombre de répétition du motif répétitif pris entre parenthèses, le polyoxyde d'éthylène utilisé ayant une masse moléculaire moyenne de 400 000 g/mol.

Dans un premier temps, il est préparé une suspension aqueuse du polyacide acrylique sodé défini ci-dessus et du polyoxyde d'éthylène défini ci-dessus en solubilisant ces deux polymères dans de l'eau déminéralisée dans des proportions égales, de sorte à ce que l'extrait sec soit de 12 %.

Dans un deuxième temps, les autres ingrédients de la composition (à savoir, le matériau actif $LiFePO_4$ (de grade nanométrique et, plus spécifiquement, de taille caractéristique inférieure à 300 nm), le noir de carbone, les nanotubes de carbone et l'éthylène glycol) sont ajoutés à la suspension aqueuse selon les proportions indiquées dans le tableau ci-dessous.

| Matériau | Pourcentage massique |
|---|---|
| $LiFePO_4$ | 75 % |
| Noir de carbone Super P® | 3 % |
| Nanotubes de carbone | 3 % |

(suite)

| Matériau | Pourcentage massique |
|---|---|
| Suspension des deux polymères | 18 % |
| Ethylèneglycol | Proportion ajustée pour obtenir un extrait sec de 10 % |

L'extrait sec de la composition est de 10 %.

Une fois l'ajout des ingrédients effectué, la composition obtenue est soumise à une opération de dispersion mécanique avec un fort taux de cisaillement (10000 tours/minute) puis traité aux ultrasons pendant 20 minutes.

La composition est ensuite caractérisée en termes de viscosité et de dispersion granulométrique.

La viscosité dynamique est étudiée par le biais d'une courbe d'écoulement illustrée sur la figure 1 (représentant l'évolution de la viscosité dynamique $\mu$ (en Pa.s) en fonction du taux de cisaillement D (en $s^{-1}$)) obtenue en augmentant le taux de cisaillement jusqu'à une certaine valeur (en l'occurrence, ici, le taux de cisaillement va de 0,01 à 150 $s^{-1}$) puis, une fois arrivé à la valeur finale, en le réduisant immédiatement jusqu'au point de départ. La valeur de viscosité dynamique retenue est celle pour laquelle le taux de cisaillement est de 10 $s^{-1}$ et pour laquelle les deux courbes se confondent, cette valeur de viscosité dynamique étant inférieure à 1 Pa.s.

Cette courbe est obtenue avec un rhéomètre à cône plan en faisant varier le cisaillement (soit la vitesse de rotation du cône) et en mesurant le couple résultant.

La distribution en nombre de la taille des particules est étudiée par le biais de deux courbes, respectivement un courbe de fréquence séparée (courbe a) de la figure 2) et une courbe de fréquence cumulée (courbe b) de la figure 2)) avec en abscisse le diamètre moyen de particules d (en $\mu$m) et en ordonnée la fréquence F (en %), ladite distribution étant obtenue au moyen d'un spectroscope électro-acoustique. A partir de la courbe b), il est déterminé un $d_{90}$ de 1,45 $\mu$m, ce qui signifie que 90 % des particules présentent un diamètre moyen de particules inférieur à 1,45 $\mu$m.

Grâce à cette viscosité dynamique et à cette distribution de taille, la composition de cet exemple est ainsi tout à fait adaptée pour des procédés d'impression numérique, tel que l'impression par jet d'aérosol.

Pour tester les performances électrochimiques de cette composition, celle-ci est transformée en une électrode et transposée dans une cellule de batterie.

Plus précisément, la composition est déposée sur un feuillard en aluminium puis séchée à 60°C pendant 24 heures, de sorte à ce que l'eau et l'éthylèneglycol de la composition soient éliminés. L'électrode ainsi obtenue est ensuite découpée pour former une pastille de 14 mm de diamètre avant d'être à nouveau séchée sous vide pendant 24 heures.

L'électrode et son substrat sont ensuite montés dans une pile bouton face à une électrode en lithium métal, l'électrode et son substrat et l'électrode en lithium métal étant séparées par un électrolyte gélifié consistant en un mélange $POE/PAA_{Na}$ (50/50) (soit un mélange 50/50 de polyoxyde d'éthylène et d'un poly(acide acrylique) sodé, c'est-à-dire sous forme d'un sel de sodium) et en du succinodinitrile, dans lequel est dissous 1M de LiTFSI.

Au contact de cet électrolyte, le polyoxyde d'éthylène présent dans l'électrode positive absorbe du solvant succinodinitrile et se gonfle. L'électrode ainsi gélifiée se présente sous forme d'une membrane solide d'une épaisseur de 20 $\mu$m sans que l'électrolyte ne s'en écoule.

La cellule de batterie obtenue a été soumise à des tests de cyclage (respectivement aux régimes C/20-D/20, C/10-D/10, C/5-D/5 et C/2-D/2), les résultats de ces tests étant reportés sur la figure 3 jointe en annexe illustrant l'évolution de la tension U (en V) en fonction de la capacité C (en mAh/g) avec les courbes a) et b) relatives aux cycles 2 et 10 pour le régime C/20-D/20, la courbe c) relative au cycle 40 pour le régime C/10-D/10, la courbe d) relative au cycle 60 pour le régime C/5-D/5 et la courbe e) relative au cycle 70 pour le régime C/2-D/2.

Il ressort notamment pour le régime C/20-D/20 que les capacités restituées sont légèrement supérieures (environ 150 mAh/g) à la capacité spécifique théorique du matériau $LiFePO_4$ (qui est de l'ordre de 140 mAh/g).

<u>EXEMPLE 2</u>

Le présent exemple illustre la préparation d'une composition conforme à l'invention comprenant les ingrédients suivants : de l'acide polyacrylique sodé identique à celui de l'exemple 1, du polyoxyde d'éthylène, du noir de carbone Super P®, des nanotubes de carbone multiparois identiques à ceux de l'exemple 1, du $Li_4Ti_5O_{12}$ et de l'éthylène glycol, ce dernier étant utilisé pour ajuster l'extrait sec de la composition à une valeur choisie.

Le $Li_4Ti_5O_{12}$ est de grade nanométrique et, plus spécifiquement, de taille caractéristique inférieure à 300 nm.

Dans un premier temps, il est préparé une suspension aqueuse du polyacide acrylique sodé défini ci-dessus et du polyoxyde d'éthylène défini ci-dessus en solubilisant ces deux polymères dans de l'eau déminéralisée dans des proportions égales, de sorte à ce que l'extrait sec soit de 12 %.

Dans un deuxième temps, les autres ingrédients de la composition (à savoir, le matériau actif $Li_4Ti_5O_{12}$, le noir

de carbone, les nanotubes de carbone et l'éthylène glycol) sont ajoutés à la suspension selon les proportions indiquées dans le tableau ci-dessous.

| Matériau | Pourcentage massique |
|---|---|
| $Li_4Ti_5O_{12}$ | 75 % |
| Noir de carbone Super P® | 3 % |
| Nanotubes de carbone | 3 % |
| Suspension des deux polymères | 18 % |
| Ethylèneglycol | Proportion ajustée pour obtenir un extrait sec de 10 % |

L'extrait sec de la composition est de 10 %.

Une fois l'ajout des ingrédients effectué, la composition obtenue est soumise à une opération de dispersion mécanique avec un fort taux de cisaillement (10000 tours/minute) puis traité aux ultrasons pendant 20 minutes.

La composition est ensuite caractérisée en termes de viscosité dynamique et de dispersion granulométrique selon des modalités similaires à celles de l'exemple 1.

Comme il ressort de la figure 4, la valeur de viscosité dynamique pour un taux de cisaillement de 10 $s^{-1}$ est inférieure à 1 Pa.s.

Quant à la dispersion granulométrique, elle a été étudiée, sur la figure 5, par le biais de deux courbes, respectivement un courbe de fréquence séparée (courbe a) de la figure 2) et une courbe de fréquence cumulée (courbe b) de la figure 5)) avec en abscisse le diamètre moyen de particules d (en $\mu$m) et en ordonnée la fréquence F (en %), ladite distribution étant obtenue au moyen d'un spectroscope électro-acoustique.

Il ressort, de la figure 5, courbe b), un $d_{90}$ de 1,14 $\mu$m, ce qui signifie que 90 % des particules présentent un diamètre de particules inférieur à 1,14 $\mu$m.

Au même titre que pour la composition de l'exemple 1, la composition de l'exemple 2 est aussi tout à fait adaptée pour des procédés d'impression numérique, tel que l'impression par jet d'aérosol.

Pour tester les performances électrochimiques de cette composition, celle-ci est transformée en une électrode et transposée dans une cellule de batterie.

Plus précisément, la composition est déposée sur un feuillard en aluminium puis séchée à 60°C pendant 24 heures, de sorte à ce que l'eau et l'éthylèneglycol de la composition soient éliminés. L'électrode ainsi obtenue est ensuite découpée pour former une pastille de 14 mm de diamètre avant d'être à nouveau séchée sous vide pendant 24 heures.

L'électrode et son substrat sont ensuite montés dans une pile bouton face à une électrode en lithium métal, l'électrode et son substrat et l'électrode en lithium métal étant séparées par un électrolyte gélifié consistant en un mélange 50/50 POE/$PAA_{Na}$ (soit un mélange 50/50 de polyoxyde d'éthylène et d'un poly(acide acrylique) sodé, c'est-à-dire sous forme d'un sel de sodium) et en du succinodinitrile, dans lequel est dissous 1M de LiTFSI.

Au contact de cet électrolyte, le polyoxyde d'éthylène présent dans l'électrode positive absorbe du solvant succinodinitrile et se gonfle. L'électrode ainsi gélifiée se présente sous forme de membrane solide d'une épaisseur de 10 $\mu$m sans que l'électrolyte ne s'en écoule.

La cellule de batterie obtenue a été soumise à des tests de cyclage (respectivement aux régimes C/20-D/20, C/10-D/10, C/5-D/5 et C/2-D/2), les résultats de ces tests étant reportés sur la figure 6 jointe en annexe illustrant l'évolution de la tension U (en V) en fonction de la capacité C (en mAh/g) avec la courbe a) relative au cycle 15 pour le régime C/20-D/20, la courbe b) relative au cycle 23 pour le régime C/10-D/10, la courbe c) relative au cycle 35 pour le régime C/5-D/5 et la courbe d) relative au cycle 74 pour le régime C/2-D/2.

Il ressort notamment pour le régime C/20-D/20 que les capacités restituées sont de l'ordre de 140 mAh/g, ce qui est légèrement inférieur à la capacité spécifique théorique du matériau $Li_4Ti_5O_{12}$ (qui est de l'ordre de 160 mAh/g).

EXEMPLE 3

Cet exemple illustre l'utilisation des compositions de l'invention pour la réalisation d'électrodes par la technique de d'impression numérique par jet d'aérosol (correspondant à la terminologie anglaise «*aerosol jetting printing*»), cette technique fonctionnant selon le principe de génération d'un brouillard qui atomise le matériau source (en l'occurrence, ici, la composition) sous forme de gouttelettes de l'ordre de un à deux micromètres de diamètre. Les particules dans le flux d'aérosol résultant sont ensuite concentrées dans un impacteur virtuel et ensuite convoyées jusqu'à la buse d'impression pointée en direction du substrat de dépôt.

La composition de l'exemple 1 et la composition de l'exemple 2 ont pu être imprimées sur un substrat polymère selon un motif interdigité, c'est-à-dire un motif comprenant une pluralité de bandes parallèles entre elles et toutes reliées

à une bande principale perpendiculaire auxdites bandes parallèles.

Le motif obtenu avec la composition de l'exemple 1 est illustré sur la figure 7, représentant deux photographies de ce motif, les caractéristiques de ce motif étant les suivantes :

- largeur de lignes : 116 ± 3 μm ;
- épaisseur de lignes : 2,1 ± 0,2 μm ; et
- espace entre les lignes : 58 ± 2 μm.

Cette technique d'impression par jet d'aérosol permet d'imprimer des compositions visqueuses avec une résolution et une épaisseur supérieures par rapport à la technique d'impression par jet d'encre.

Qui plus est, les électrodes ainsi imprimées présentent une homogénéité remarquable et présente un réseau conducteur à percolation optimisé, du fait de la présence notamment de nanotubes de carbone.

## Revendications

1. Composition aqueuse pour la fabrication d'électrode pour batterie au lithium comprenant au moins un premier polymère de la famille des poly(acide acrylique), au moins un deuxième polymère de la famille des polyoxydes d'éthylène, au moins un matériau actif sous forme particulaire et au moins un matériau conducteur électronique sous forme particulaire.

2. Composition selon la revendication 1, dans laquelle le premier polymère est constitué par un enchaînement du motif répétitif de formule (I) suivante :

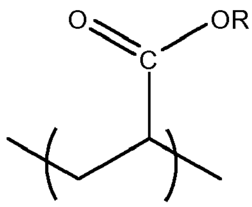

(I)

dans laquelle $R^1$ représente un atome d'hydrogène ou un cation monovalent.

3. Composition selon la revendication 1 ou 2, dans laquelle le premier polymère est un poly(acide acrylique) sous forme de sel.

4. Composition selon la revendication 2 ou 3, dans laquelle $R^1$ est un cation sodium.

5. Composition selon l'une quelconque des revendications précédentes, dans laquelle, lorsque la composition est destinée à la fabrication d'une électrode positive, le matériau actif est :

- un oxyde lithié comprenant du manganèse de structure spinelle de formule (IV) suivante :

$$LiNi_{1-x}Mn_{1+x}O_4 \quad (IV)$$

dans laquelle 0<x<1 ;
- un oxyde lithié de l'une des formules (V) ou (VI) suivantes :

$$LiNi_xMn_yCo_zO_2 \; Li_{1+x}(Ni_{1/3}Mn_{1/3}Co_{1/3})_{1-x}O_2 \quad (V)\;(VI)$$

dans lesquelles 0<x,y,z<1 et x+y+z=1 ;
- un matériau de formule $LiM^1PO_4$, dans laquelle $M^1$ est un élément de transition ;
- un matériau de formule $LiMeO_2$ avec Me étant un élément choisi parmi Ni, Co, Mn, Al et les combinaisons de ceux-ci ;
- un matériau de formule $LiM'_2O_4$ avec M' étant un élément choisi parmi Mn, Co et Ni;

- un matériau de formule $LiNi_{1-x}CO_xO_2$ avec 0<x<1 ;
- du dioxyde de manganèse $MnO_2$; ou
- un matériau actif organique, tel qu'un composé anthraquinone ou un polymère poly(2,2,6,6-tétraméthylpipéridinyloxyméthacrylate).

**6.** Composition selon l'une quelconque des revendications précédentes, dans laquelle, lorsque la composition est destinée à la fabrication d'une électrode négative, le matériau actif est du carbone, un oxyde mixte de lithium ou un matériau actif organique, tel que du pérylène-3,4,9,10-tétracarboxylate de tétralithium.

**7.** Composition selon l'une quelconque des revendications précédentes, dans laquelle le matériau conducteur électronique est du noir de carbone, des nanotubes de carbone, des fibres de carbone et des mélanges de ceux-ci.

**8.** Composition selon l'une quelconque des revendications précédentes, comprenant, en outre, au moins un solvant organique de la famille des glycols.

**9.** Composition selon l'une quelconque des revendications précédentes, présentant une viscosité dynamique inférieure à 1 Pa.s pour un taux de cisaillement de 10 $s^{-1}$ et/ou une dispersion granulométrique telle que $d_{90}$ soit inférieure à 5 $\mu$m.

**10.** Procédé de préparation d'une électrode pour batterie au lithium comprenant les étapes suivantes :

- une étape de dépôt d'une composition telle que définie selon l'une quelconque des revendications 1 à 9 sous forme d'au moins une couche sur un substrat ;
- une étape d'élimination de l'eau et, le cas échéant, du ou des solvants organiques contenus dans la composition.

**11.** Procédé de préparation selon la revendication 10, dans lequel l'étape de dépôt est réalisée par une technique numérique d'impression telle que la technique à jet d'encre ou la technique à jet d'aérosol.

**12.** Electrode pour batterie au lithium composée d'un matériau composite comprenant une matrice polymérique comprenant au moins un premier polymère de la famille des poly(acide acrylique), au moins un deuxième polymère de la famille des polyoxydes d'éthylène, dans laquelle sont dispersés au moins un matériau actif sous forme particulaire et au moins un matériau conducteur électronique sous forme particulaire, ledit premier polymère, ledit deuxième polymère, ledit matériau conducteur électrique et ledit matériau actif étant tel que défini selon l'une quelconque des revendications 1 à 9.

**13.** Cellule de batterie au lithium comprenant une électrode positive et une électrode négative disposées de part et d'autre d'un électrolyte, **caractérisée en ce que** l'une au moins desdites électrodes est une électrode telle que définie selon la revendication 12 et **en ce que** l'électrolyte comprend au moins un solvant d'électrolyte apte à gélifier l'un au moins des polymères constitutifs de la ou les électrodes telle(s) que définie(s) selon la revendication 12.

**14.** Cellule de batterie selon la revendication 13, dans laquelle le solvant d'électrolyte est un solvant dinitrile répondant à la formule (VII) suivante :

$$N\equiv C-R^2-C\equiv N \qquad (VII)$$

dans laquelle $R^2$ est un groupe alkylène et, plus spécifiquement, un groupe alkylène comprenant 1 ou 2 atomes de carbone.

**15.** Cellule de batterie selon la revendication 13 ou 14, dans laquelle l'électrolyte est un électrolyte gélifié comprenant un ou plusieurs polymères gélifiants au contact du solvant d'électrolyte.

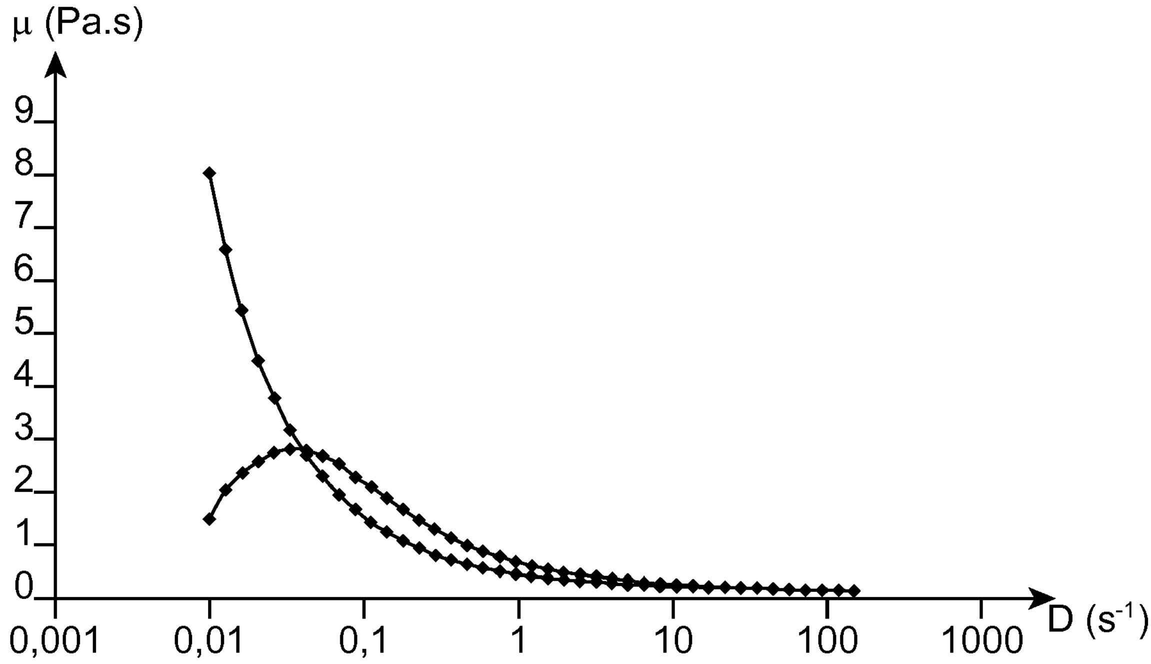
μ (Pa.s)
9
8
7
6
5
4
3
2
1
0
0,001
0,01
0,1
1
10
100
1000
D (s-1)

FIG. 1

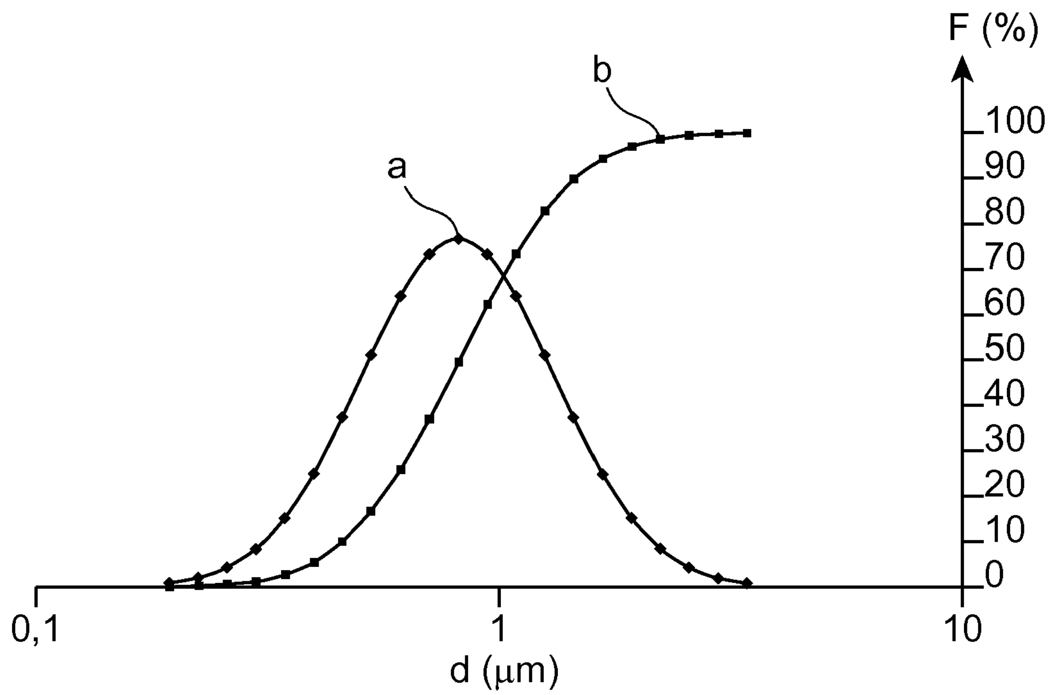
F (%)
b
a
100
90
80
70
60
50
40
30
20
10
0
0,1
1
10
d (μm)

FIG. 2

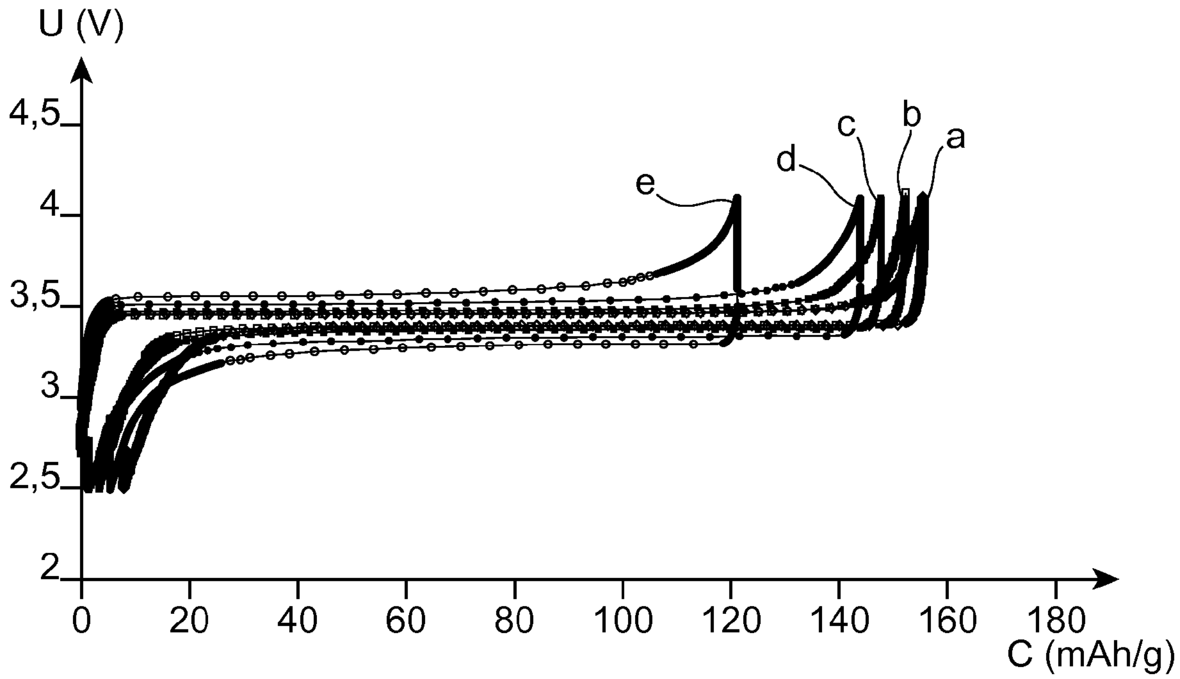
U (V)
4,5
4
3,5
3
2,5
2
0
20
40
60
80
100
120
140
160
180
C (mAh/g)
a
b
c
d
e

FIG. 3

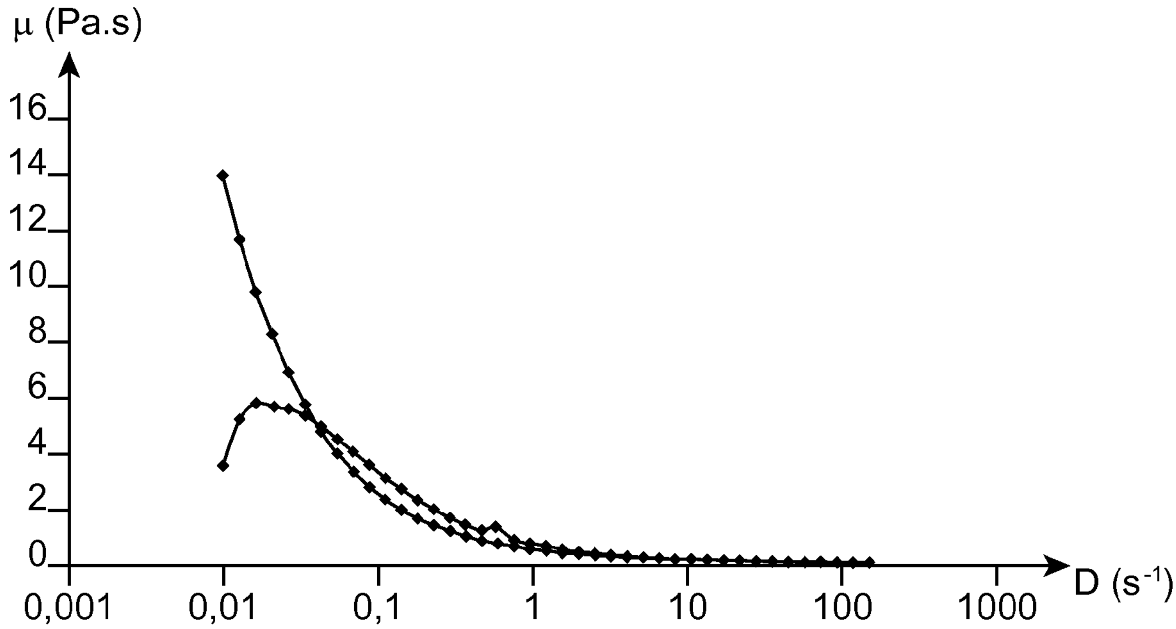
μ (Pa.s)
16
14
12
10
8
6
4
2
0
0,001
0,01
0,1
1
10
100
1000
D (s-1)

FIG. 4

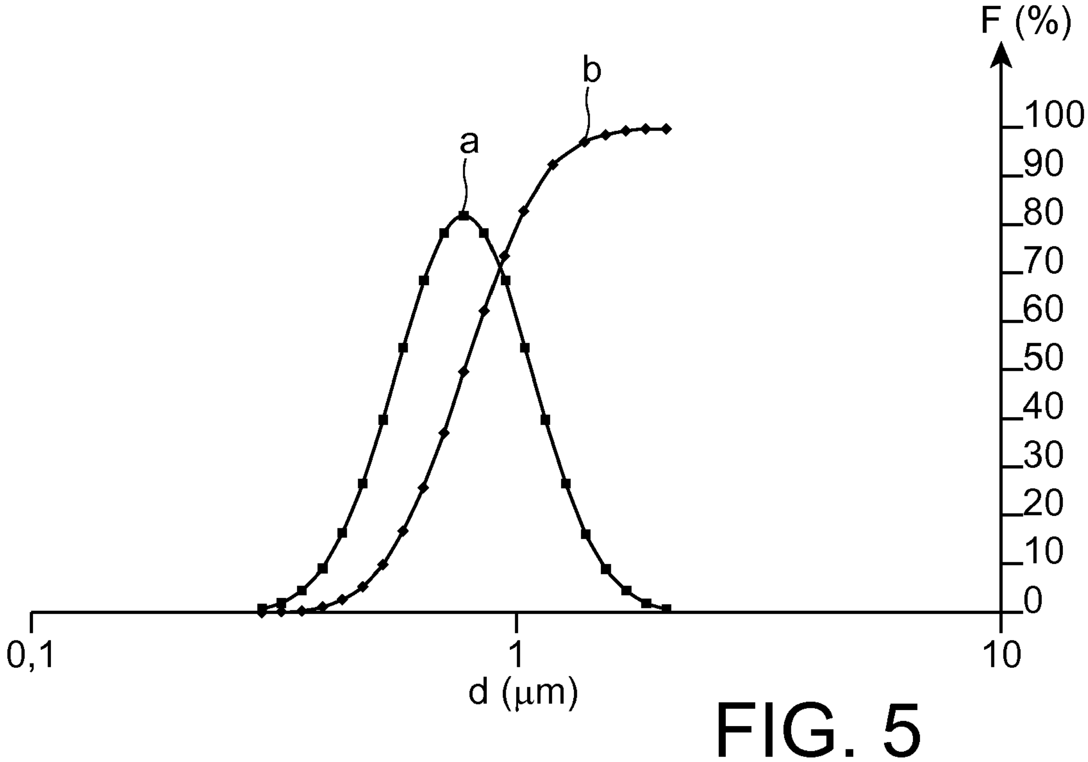
F (%)
100
90
80
70
60
50
40
30
20
10
0
a
b
0,1
1
10
d (μm)

FIG. 5

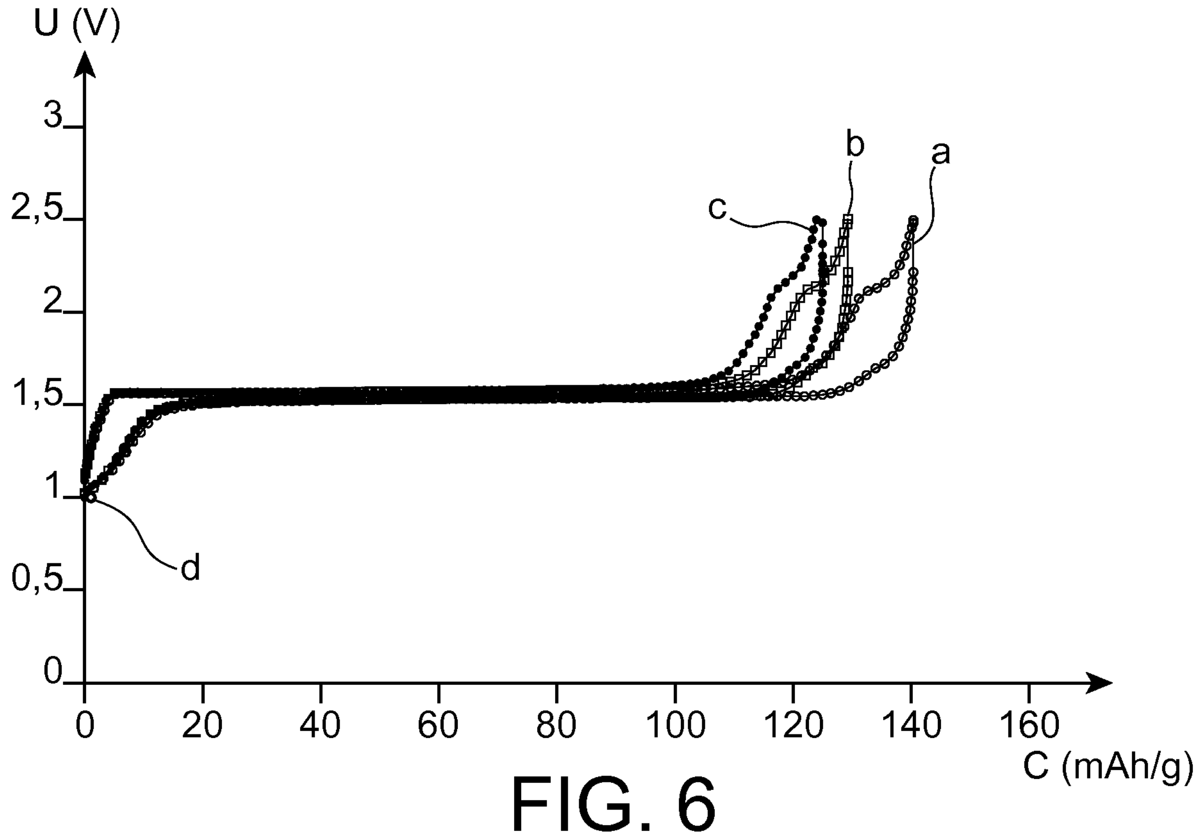
U (V)
3
2,5
2
1,5
1
0,5
0
a
b
c
d
0
20
40
60
80
100
120
140
160
C (mAh/g)

FIG. 6

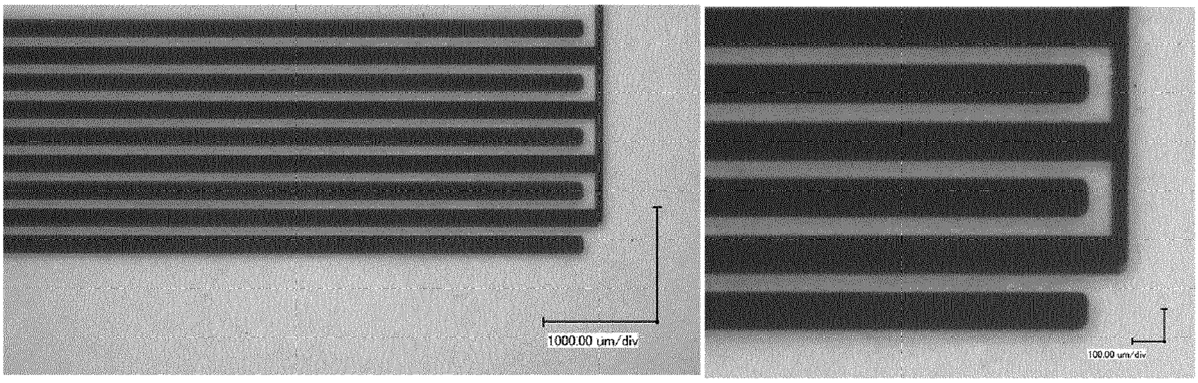


FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2012013872 A


### Littérature non-brevet citée dans la description


- *Journal of Power Sources,* 2009, vol. 189, 547-551